# EUROPEAN PATENT SPECIFICATION

(11) **EP 4 376 187 B1**
(45) Date of publication and mention of the grant of the patent: **15.04.2026**
(21) Application number: 22845019.3
(22) Date of filing: 07.06.2022
(51) Int. Cl.: H01M 50/24, H01M 50/244, H01M 10/658, H01M 10/635, F28F 3/12

(54) **ENERGY STORAGE DEVICE AND TEMPERATURE REGULATING STRUCTURE THEREOF**
ENERGIESPEICHERVORRICHTUNG UND TEMPERATURREGELUNGSSTRUKTUR DAFÜR
DISPOSITIF DE STOCKAGE D'ÉNERGIE ET STRUCTURE DE RÉGULATION DE TEMPÉRATURE ASSOCIÉE

(30) Priority: 21.07.2021 CN 202121668719 U
(43) Date of publication of application: 29.05.2024
(73) Proprietor: Sungrow Energy Storage Technology Co., Ltd., Hefei, Anhui 230088 (CN)
(72) Inventor: SU, Jinguo, Hefei, Anhui 230088 (CN); PAN, Feng, Hefei, Anhui 230088 (CN)
(74) Representative: Epping - Hermann - Fischer
(86) International application number: PCT/CN2022/097282
(87) International publication number: WO 2023/000852

(56) References cited:
- WO-A1-2019/163353
- CN-A- 111 755 775
- CN-U- 210 805 886
- CN-U- 213 026 307
- CN-U- 215 869 606
- US-A1- 2011 052 960

## Description

### FIELD

The present application relates to the technical field of cooling of energy storage batteries, and in particular to an energy storage device and a temperature regulating structure thereof.

### BACKGROUND

In a photovoltaic power generation system, an energy storage device is usually used to store excess energy. The energy storage device mainly includes an energy storage battery. In order to ensure normal operation, it is necessary to adjust the temperature of the energy storage battery.

At present, a liquid cooling plate is mainly used to cool and heat a battery cell of the energy storage battery. Specifically, the liquid cooling plate is fixed to a housing of the energy storage device, or the liquid cooling plate is integrated with the housing of the energy storage device. Heat or cold energy dissipated by the liquid cooling plate is easily transferred to an external environment through the housing, which affects the regulating efficiency of the liquid cooling plate. For example, in the case that the energy storage device is located in a low-temperature environment, if the battery cell is being heated, the heat dissipated by the liquid cooling plate is transferred to the external environment through the housing, resulting in a lower heating efficiency of the liquid cooling plate. In the case that the energy storage device is located in a high-temperature environment, if the battery cell is being cooled, the cold energy dissipated by the liquid cooling plate is transferred to the external environment through the housing, resulting in a lower cooling efficiency of the liquid cooling plate.

In summary, how to adjust the temperature of the energy storage battery to reduce the influence of the external environment and improve regulation efficiency is an urgent problem to be solved by those skilled in the art.

CN 213 026 307 U, on which the preamble of claim 1 is based, discloses a battery, including a box for encapsulating multiple battery cells, a thermal management component, and a protective member. The box body includes a cover body and a box shell. The thermal management component may constitute the bottom portion of the housing or a portion of the bottom portion. The thermal management component may include a first heat conducting plate and a second heat conducting plate, a groove structure corresponding to the flow channel is formed on the second heat conducting plate, and an avoidance structure is formed on the first heat conducting plate. The thermal management component may constitute the side portion of the housing or a portion of the side portion, or, the thermal management component may constitute the bottom portion of the housing or a portion of the bottom portion. The collection chamber is disposed between the shield member and the heat management component.

CN 111 755 775 A discloses a battery cold plate, which is used to cool batteries. The battery cold plate includes a plate body, which has a cooling cavity and a first heat insulation cavity. The cooling cavity is arranged on one side of the first heat insulation cavity, and the side of the cooling cavity away from the first insulation cavity can contact the battery. The plate body further has second heat insulating cavities, which are located at both ends of the whole of the first heat-insulating cavity and the cooling cavity.

WO 2019/163353 A1 discloses a battery unit including a battery and a heat exchange system. The battery unit includes at least a first case and a second case connected to each other, to provide a case that houses the battery. The second case defines an accommodation chamber that accommodates the heat exchanger and the elastic member. The elastic member presses the heat exchanger toward the battery.

### SUMMARY

A temperature regulating structure of an energy storage device is provided according to the present application to reduce the influence of the external environment and improve regulation efficiency. Another object of the present application is to provide an energy storage device including the above temperature regulating structure.

In order to achieve the above objects, the present application provides the following technical solutions:
A temperature regulating structure as defined in claim 1.

In an embodiment, the housing further includes a reinforcing member fixed in the second thermal insulation cavity, and the reinforcing member separates the second thermal insulation cavity into at least two sub-cavities.

In an embodiment, one end of the reinforcing member is fixedly connected to the exterior plate, and the other end of the reinforcing member is fixedly connected to the interior plate.

In an embodiment, the interior plate and the exterior plate are integrated formed.

In an embodiment, the temperature regulating plate is provided with a first thermal insulation groove, and the housing and the first thermal insulation groove form the first thermal insulation cavity.

In an embodiment, the temperature regulating plate includes a first plate and a second plate arranged in parallel, and the first plate and the second plate form a temperature regulating cavity for the circulation of a temperature regulating medium. The second plate is closer to the housing than the first plate, the second plate is provided with a first protrusion, the first protrusion protrudes towards the first plate and forms the first thermal insulation groove, and the first protrusion is fixedly and sealingly connected to the first plate.

In an embodiment, the housing is provided with a second thermal insulation groove, and the temperature regulating plate and the second thermal insulation groove form the first thermal insulation cavity.

In an embodiment, the temperature regulating plate is fixed to a bottom housing plate of the housing. The bottom housing plate is provided with a support structure that supports the temperature regulating plate, and the support structure protrudes from an interior wall of the bottom housing plate.

In an embodiment, the temperature regulating plate is provided with a support groove, and the support structure is arranged in the support groove to support the temperature regulating plate.

In an embodiment, the temperature regulating plate includes a first plate and a second plate arranged in parallel, and the first plate and the second plate form a temperature regulating cavity, in which the circulation of a temperature regulating medium is made. The second plate is positioned closer to the housing than the first plate, the second plate is provided with a second protrusion, the second protrusion protrudes towards the first plate and forms the support groove, and the second protrusion is fixedly and sealingly connected to the first plate.

In an embodiment, a portion, supported by the support structure, of the temperature regulating plate is defined as a supported portion, the supported portion and the supporting structure are arranged in one-to-one correspondence, and at least two battery cells are located at the same supported portion.

In an embodiment, the support structure is in a hollow structure.

In an embodiment, the temperature regulating structure of an energy storage device further includes: a connecting member fixed to the housing, and a support beam fixedly connected to the connecting member. The supporting beam supports the temperature regulating plate.

In an embodiment, in a case that the second thermal insulation cavity is formed by the housing, the housing plate, which formed the second thermal insulation cavity, of the housing is formed by extrusion molding;
in a case that the housing and the temperature regulating plate form the first thermal insulation cavity and there is no the second thermal insulation cavity formed in the housing, the housing is a die-cast housing.

Based on the temperature regulating structure of an energy storage device described above, an energy storage device is also provided according to the present application. The energy storage device includes the temperature regulating structure described above.

According to the temperature regulating structure of an energy storage device provided in the present application, the first thermal insulation cavity is formed by the housing and the temperature regulating plate, and/or the second thermal insulation cavity is formed by the housing. The first thermal insulation cavity and the second thermal insulation cavity are provided to reduce the heat exchange between the temperature regulating plate and the outside through the housing, thereby reducing the influence of the external environment on the temperature regulating plate and improving the regulating efficiency of the temperature regulating plate.

### BRIEF DESCRIPTION OF THE DRAWINGS

In order to more clearly illustrate the technical solutions in the embodiments of the present application or in the conventional technology, the drawings required in the description of the embodiments or the conventional technology will be briefly introduced below. Apparently, the drawings in the following description are only part of the embodiments of the present application. For those skilled in the art, other drawings may also be obtained based on the structures shown in these drawings without creative efforts.
Figure 1 is a schematic structural view of a temperature regulating structure of an energy storage device according to an embodiment of the present application;
Figure 2 is an enlarged schematic view of Part A in Figure 1;
Figure 3 is an enlarged schematic view of Part B in Figure 1;
Figure 4 is a partial schematic structural view of a temperature regulating plate in Figure 1;
Figure 5 is another schematic structural view of a temperature regulating structure of an energy storage device according to an embodiment of the present application;
Figure 6 is an enlarged schematic view of Part C in Figure 5;
Figure 7 is a partial schematic structural view of a housing in Figure 5; and
Figure 8 is a partial schematic structural view of a temperature regulating plate in Figure 5.

### DETAILED DESCRIPTION OF EMBODIMENTS

The technical solutions in the embodiments of the present application are clearly and completely described below in conjunction with the drawings. Apparently, the described embodiments are only part of the embodiments of the present application, not all of the embodiments of the present application. Any other embodiment obtained by those skilled in the art based on the embodiments in the present application without creative efforts shall fall within the protection scope of the present application.

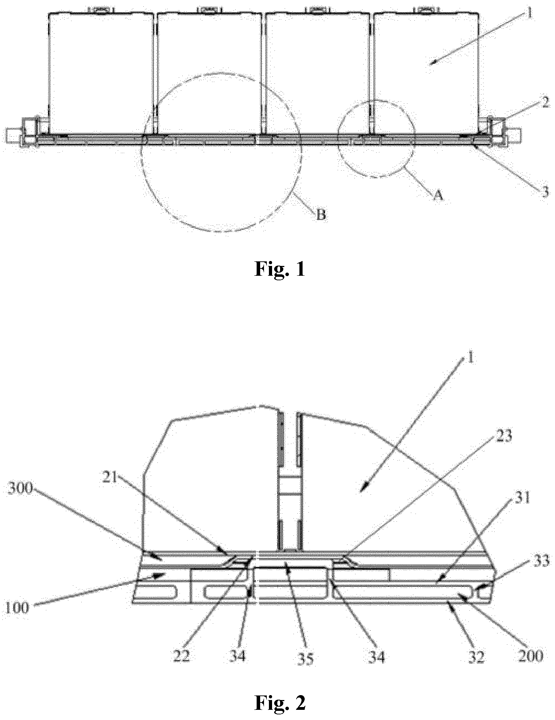

As shown in Figures 1 to 8, a temperature regulating structure of an energy storage device according to an embodiment of the present application includes: a housing 3 and a temperature regulating plate 2 fixedly connected to the housing 3. The housing 3 and the temperature regulating plate 2 form a first thermal insulation cavity 100, and/or the housing 3 has a second thermal insulation cavity 200.

It should be noted that the temperature regulating plate 2 is configured to be thermally connected to a battery cell 1 to ensure that the temperature regulating plate 2 can adjust the temperature of the battery cell 1. The temperature regulating plate 2 may be configured to heat the battery cell 1, or may be configured to cool and heat the battery cell 1, which can be selected according to actual requirements. The type of the temperature regulating plate 2 is selected according to actual requirements. For example, the temperature regulating plate 2 is a liquid cooling plate, which can heat the battery cell 1 or cool the battery cell 1.

It can be understood that the second thermal insulation cavity 200 and the temperature regulating plate 2 are located on a same housing plate of the housing 3, that is, the second thermal insulation cavity 200 and the temperature regulating plate 2 are located on the same side of the battery cell 1. For example, the second thermal insulation cavity 200 and the temperature regulating plate 2 are located on a bottom housing plate of the housing 3. It should be noted that the bottom housing plate is located at a bottom end of the housing 3.

According to the temperature regulating structure of an energy storage device provided by the embodiments of the present application, the first thermal insulation cavity 100 is formed by the housing 3 and the temperature regulating plate 2, and/or the housing 3 has the second thermal insulation cavity 200. The first thermal insulation cavity 100 and the second thermal insulation cavity 200 can be used to reduce the heat exchange between the temperature regulating plate 2 and the outside through the housing 3, thereby reducing the influence of the external environment on the temperature regulating plate 2 and improving the regulating efficiency of the temperature regulating plate 2.

The number of the first thermal insulation cavities 100 may be one, two or more, and the number of the second thermal insulation cavities 200 may be one, two or more. In order to improve the thermal insulation effect, the number of the first thermal insulation cavities 100 may be two or more, and the number of the second thermal insulation cavities 200 may be two or more.

The sizes and shapes of the first thermal insulation cavity 100 and the second thermal insulation cavity 200 are selected according to actual requirements, which is not limited in the embodiment.

In the temperature regulating structure of an energy storage device, in case that the housing 3 has the second thermal insulation cavity 200, the structure of the housing 3 is designed according to actual requirements. Specifically, the housing 3 includes an interior plate 31 and an exterior plate 32. The temperature regulating plate 2 is fixedly connected to the interior plate 31. The second thermal insulation cavity 200 is formed between the interior plate 31 and the exterior plate 32.

It can be understood that the exterior plate 32 is located on an outer side of the housing 3, and the interior plate 31 is located on an inner side of the housing 3. That is, an exterior wall of the exterior plate 32 is the outer side of the housing 3, and an interior wall of the interior plate 31 is an exterior wall of the housing 3. The housing 3 includes the interior plate 31 and the exterior plate 32, and at least one of housing plates of the housing 3 includes the interior plate 31 and the exterior plate 32.

The housing 3 is in a hollow structure. In order to ensure the strength of the housing 3, the housing 3 further includes multiple reinforcing members 33 fixed to the second thermal insulation cavity 200. The reinforcing member 33 separates the second thermal insulation cavity 200 into at least two sub-cavities.

In the housing 3, the interior plate 31 and the exterior plate 32 are two separate parts, or the interior plate 31 and the exterior plate 32 are integrated. In order to facilitate production and simplify assembly, the interior plate 31 and the exterior plate 32 may be in an integrated structure.

In order to improve the reinforcing effect, one end of the reinforcing member 33 is fixedly connected to the exterior plate 32, and the other end of the reinforcing member 33 is fixedly connected to the interior plate 31.

In practical application, the reinforcing member 33 may be arranged in other ways. For example, both ends of the reinforcing member 33 are fixedly connected to the exterior plate 32, which is not limited to the above embodiment.

The shape and the number of the reinforcing members 33 may be selected according to actual requirements. For example, the reinforcing member 33 is a reinforcing plate or reinforcing rib, the number of the reinforcing members 33 may be one, two or more, which is not limited in the embodiment.

**In** order to facilitate production and simplify installation, the interior plate 31, the exterior plate 32, and the reinforcing member 33 may be in an integrated structure. Alternatively, at least two among the interior plate 31, the exterior plate 32, and the reinforcing member 33 may be separate parts, which is not limited to the above embodiments.

**In** the temperature regulating structure of an energy storage device, in case that the first thermal insulation cavity 100 is formed by the housing 3 and the temperature regulating plate 2, in order to facilitate the formation of the first thermal insulation cavity 100, the temperature regulating plate 2 may be provided with a first thermal insulation groove 24, and the first thermal insulation cavity 100 is formed by the housing 3 and the first thermal insulation groove 24.

Specifically, the temperature regulating plate 2 comprises a first plate 21 and a second plate 22 that are arranged in parallel. The first plate 21 and the second plate 22 form a temperature regulating cavity 300 for the circulation of a temperature regulating medium. The second plate 22 is closer to the housing 3 than the first plate 21, and the second plate 22 has a first protrusion. The first protrusion protrudes towards the first plate 21 and forms the first thermal insulation groove 24. The first protrusion is fixedly and sealingly connected to the first plate 21.

**In** order to facilitate the arrangement of the first protrusion, the second plate 22 may form the first protrusion by stamping or other processes, which is not limited to the embodiment.

**In** practical application, the first protrusion may not be provided, and the first thermal insulation groove 24 may be directly provided on the second plate 22, which is not limited to the above embodiments.

**In** order to facilitate the arrangement of the first protrusion, the second plate 22 may form the first protrusion by stamping or other processes.

The specific structure of the temperature regulating plate 2 is selected according to actual requirements, which is not limited to the above embodiments.

**In** practical application, the housing 3 may also be provided with a second thermal insulation groove. The temperature regulating plate 2 and the second thermal insulation groove form the first thermal insulation cavity 100. Specifically, in case that the housing 3 includes the interior plate 31 and the exterior plate 32 and the temperature regulating plate 2 is fixedly connected to the interior plate 31, the interior plate 31 may be provided with a recessed portion. The recessed portion is recessed towards the exterior plate 32 to form the second thermal insulation groove.

In the temperature regulating structure of an energy storage device, the temperature regulating plate 2 may be also provided with the first thermal insulation groove 24, the housing 3 may be also provided with second thermal insulation groove, and the second thermal insulation groove and the first thermal insulation groove 24 are joined to form the first thermal insulation cavity 100, which is not limited to the above two situations.

In the temperature regulating structure of an energy storage device, the temperature regulating plate 2 may be fixed to the bottom of the housing 3, or may be fixed to a side portion of the housing 3. In order to facilitate of cooling of the battery cell 1, the former is preferred, that is, the temperature regulating plate 2 is fixed to the bottom housing plate of the housing 3. It can be understood that the bottom housing plate is located at the bottom of the housing 3.

In that case, the temperature regulating plate 2 bears a part of the weight of the battery cell 1, so that the temperature regulating plate 2 is easily damaged, and the service life of the temperature regulating plate 2 is affected. In order to solve the above problem, the bottom housing plate may be provided with a support structure 36 for supporting the temperature regulating plate 2. The support structure 36 protrudes from an interior wall of the bottom housing plate.

In the above structure, the temperature regulating plate 2 is supported by the support structure 36, so that the weight of the battery cell 1 can be exerted on the entire housing 3. The temperature regulating plate 2 is not required to bear the weight of the battery cell 1, which reduces the risk that the temperature regulating plate 2 is broken by the battery cell 1, thereby prolonging the service life of the temperature regulating plate 2.

The number, shape, and size of the support structure 36 are selected according to actual requirements, which is not limited in the embodiment.

In order to make the temperature regulating plate 2 not bear the weight, the temperature regulating plate 2 may be provided with a support groove 23, and the support structure 36 is arranged in the support groove 23 to support the temperature regulating plate 2. **In** order to improve the effect, the support groove 23 and the support structure 36 may be arranged to be in one-to-one correspondence. Alternatively, the support groove 23 and the support structure 36 may also have other corresponding relationships, which is not limited in the embodiment.

**In** the temperature regulating structure of an energy storage device, in order to facilitate the formation of the support groove 23, the temperature regulating plate 2 comprises a first plate 21 and a second plate 22 arranged in parallel. The first plate 21 and the second plate 22 form a temperature regulating cavity 300 for the circulation of the temperature regulating medium. The second plate 22 is closer to the housing 3 than the first plate 21, and the second plate 22 has a second protrusion. The second protrusion protrudes towards the first plate 21 and forms a support groove 23. The second protrusion is fixedly and sealingly connected to the first plate 21.

**In** order to facilitate the arrangement of the second protrusion, the second plate 22 may form the second protrusion by stamping or other processes.

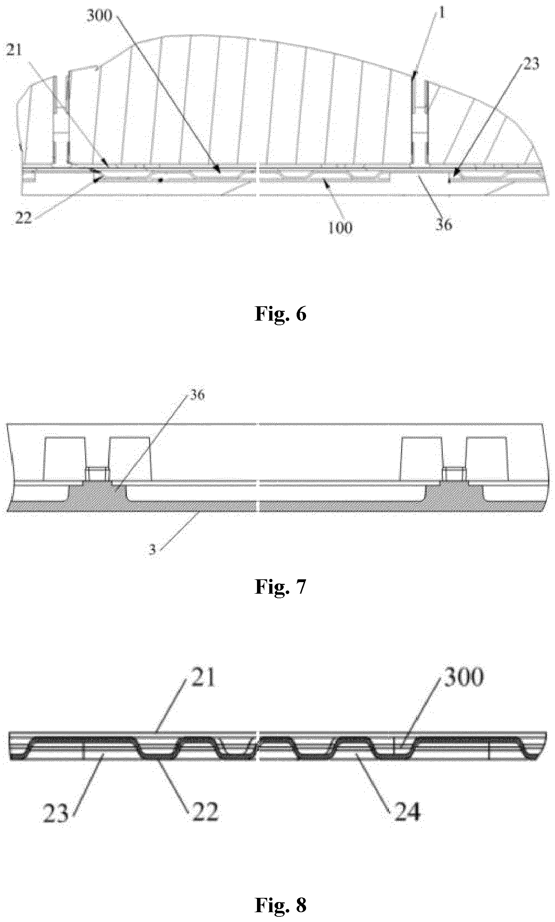

**In** practical application, in case that the temperature regulating plate 2 is provided with the support groove 23 and the first thermal insulation groove 24, the support groove 23 and the first thermal insulation groove 24 may be arranged in parallel. The number of the first thermal insulation grooves 24 between two adjacent support grooves 23 may be one, two or more. As shown in Figure 8, the number of the first thermal insulation grooves 24 between two adjacent support grooves 23 is three.

The shapes of the first thermal insulation groove 24 and the support groove 23 may be the same or different, and the sizes of the first thermal insulation groove 24 and the support groove 23 may be the same or different, which are selected according to actual requirements and not limited in the embodiment.

The specific structure of the temperature regulating plate 2 is selected according to actual requirements, which is not limited to the above embodiments.

**In** order to simplify the structure, a portion, supported by the support structure 36, of the temperature regulating plate 2 is defined as a supported portion. The supported portion and the support structure 36 are arranged in one-to-one correspondence. At least two battery cells 1 are arranged on the same supported portion.

It can be understood that at least one supported portion can bear the weight of at least two battery cells 1.

The supporting structure 36 may be in a solid structure, or may be in a hollow structure. **In** order to reduce the weight of the housing 3, the supporting structure 36 is in a hollow structure. Specifically, the supporting structure includes: a connecting member 34 fixed to the housing 3, and a supporting beam 35 fixedly connected to the connecting member 34. The support beam 35 supports the temperature regulating plate 2.

**In** case that the housing 3 includes an exterior plate 32 and an interior plate 31, one end of the connecting member 34 is fixedly connected to the support beam 35, and the other end of the connecting member 34 is fixedly connected to the exterior plate 32 of the housing 3. The connecting member 34 extends through the interior plate 31 of the housing 3.

**In** practical applications, one end of the connecting member 34 may also be fixedly connected to the interior plate 31 of the housing 3, and the connecting member 34 is not required to pass through the interior plate 31.

**In** the temperature regulating structure of an energy storage device, in case that the housing 3 is provided with the second thermal insulation cavity 200, in order to facilitate production and manufacturing, a housing plate, which is provided with the second thermal insulation cavity 200, of the housing 3 may be formed by extrusion molding. For example, the bottom housing plate, which is provided with the second thermal insulation cavity 200, is formed by extrusion molding, and other housing plates are not limited. Alternatively, the housing plate with the second thermal insulation cavity 200 may also be formed in other way, which is not limited in the embodiment.

**In** the temperature regulating structure of an energy storage device, in case that the housing 3 and the temperature regulating plate 2 form the first thermal insulation cavity 100 and the housing 3 is not provided with the second thermal insulation cavity 200, in order to facilitate production and manufacturing, the housing 3 may be a die-cast housing. Alternatively, the housing 3 may also be in other types, which is not limited in the embodiment.

**In** the temperature regulating structure of an energy storage device, in order to facilitate of fixing the housing 3 with the temperature regulating plate 2, the housing 3 and the temperature regulating plate 2 may be fixedly connected by welding. Alternatively, the temperature regulating plate 2 may also be bonded to the housing 3, which is not limited in the embodiment.

In the temperature regulating structure of an energy storage device, in order to improve the effect of the temperature regulating plate 2, a thermal-conductive insulation layer may be filled between the battery cell 1 and the liquid cooling plate 2. The specific structure and the material of the thermal-conductive insulation layer may be selected according to actual requirements, which is not limited in the embodiment.

In the temperature regulating plate 2, the first plate 21 and the second plate 22 are fixedly connected by brazing, or the first plate 21 and the second plate 22 are fixedly connected by hot rolling. Alternatively, the temperature regulating plate 2 may be in other structures, which is not limited in the embodiment.

In order to more specifically illustrate the temperature regulating structure of an energy storage device according to the embodiment, two embodiments are provided below for explanation.

### Embodiment 1

As shown in Figures 1 to 4, a temperature regulating structure of an energy storage device according to Embodiment 1 includes: a housing 3, a temperature regulating plate 2 fixedly connected to a bottom of the housing 3. The housing 3 is provided with a second thermal insulation groove. The temperature regulating plate 2 and the second thermal insulation groove form a first thermal insulation cavity 100, and the housing 3 is provided with a second insulation cavity 200.

Specifically, the temperature regulating plate 2 is fixedly connected to a bottom housing plate of the housing 3. The second thermal insulation groove is formed at the bottom housing plate, and the bottom housing plate is provided with the second insulation cavity 200.

In Embodiment 1, the temperature regulating plate 2 is provided with a support groove 23, and the bottom housing plate is provided with a support structure 36 that supports the temperature regulating plate 2. The support structure 36 protrudes from an interior wall of the bottom housing plate, and the support structure 36 is arranged in the support groove 23 to support the temperature regulating plate 2. Specifically, the support groove 23 and the support structure 36 are arranged in one-to-one correspondence.

### Embodiment 2

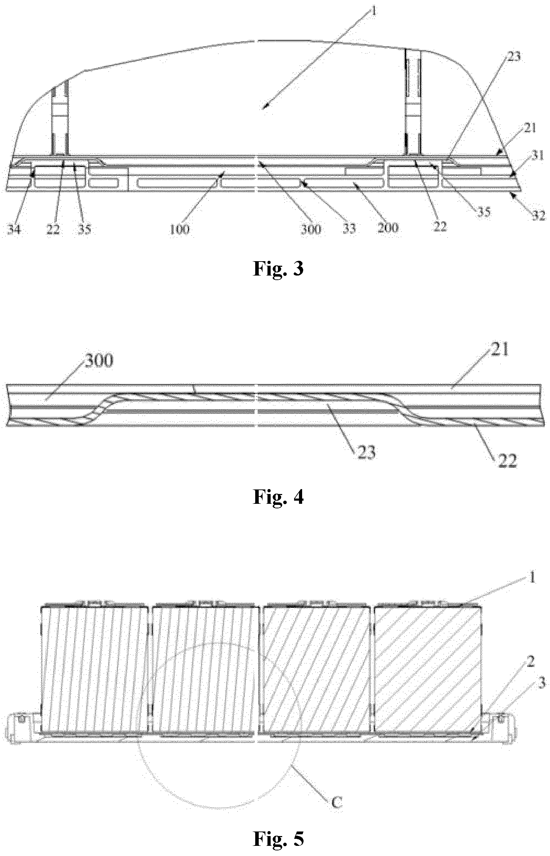

As shown in Figures 5 to 8, a temperature regulating structure of an energy storage device according to Embodiment 2 includes: a housing 3, a temperature regulating plate 2 fixedly connected to a bottom of the housing 3. The temperature regulating plate 2 is provided with a first thermal insulation groove 24, and the housing 3 and the first thermal insulation groove 24 form a first thermal insulation cavity 100.

Specifically, the temperature regulating plate 2 is fixedly connected to a bottom housing plate of the housing 3, and the bottom housing plate and the first thermal insulation groove 24 form the first thermal insulation cavity 100.

In Embodiment 2, the temperature regulating plate 2 is provided with a support groove 23, and the bottom housing plate is provided with a support structure 36 that supports the temperature regulating plate 2. The support structure 36 protrudes from an interior wall of the bottom housing plate, and the support structure 36 is arranged in the support groove 23 to support the temperature regulating plate 2. Specifically, the support groove 23 and the support structure 36 are arranged in one-to-one correspondence.

Based on the temperature regulating structure of an energy storage device according to the above embodiments, an energy storage device is further provided according to the embodiments. The energy storage device includes the temperature regulating structure of an energy storage device as described above.

Since the temperature regulating structure of the energy storage device according to the embodiments has the above technical effects, and the energy storage device includes the temperature regulating structure of an energy storage device, and thus the energy storage device also has the corresponding technical effects, which is not repeated herein.

The above description of the embodiments is provided to enable those skilled in the art to implement or use the present application. Various modifications to the embodiments are apparent within the scope defined by the claims.

## Claims

1. A temperature regulating structure of an energy storage device, comprising a housing (3) and a temperature regulating plate (2) fixedly connected to the housing (3), **characterized in that**,
the housing (3) and the temperature regulating plate (2) form a first thermal insulation cavity (100), and a second thermal insulation cavity (200) is formed by the housing (3); and
the housing (3) comprises an interior plate (31) and an exterior plate (32), the temperature regulating plate (2) is fixedly connected to the interior plate (31), and the second thermal insulation cavity (200) is provided between the interior plate (31) and the exterior plate (32).

2. The temperature regulating structure according to claim 1, wherein the housing (3) further comprises a reinforcing member (33) fixed in the second thermal insulation cavity (200), and the reinforcing member (33) separates the second thermal insulation cavity (200) into at least two sub-cavities.

3. The temperature regulating structure according to claim 2, wherein one end of the reinforcing member (33) is fixedly connected to the exterior plate (32), and the other end of the reinforcing member (33) is fixedly connected to the interior plate (31).

4. The temperature regulating structure according to claim 1, wherein the interior plate (31) and the exterior plate (32) are integrated formed.

5. The temperature regulating structure according to claim 1, wherein the temperature regulating plate (2) is provided with a first thermal insulation groove (24), and the housing (3) and the first thermal insulation groove (24) form the first thermal insulation cavity (100).

6. The temperature regulating structure according to claim 5, wherein the temperature regulating plate (2) comprises a first plate (21) and a second plate (22) arranged in parallel, and the first plate (21) and the second plate (22) form a temperature regulating cavity (300) for the circulation of a temperature regulating medium, wherein the second plate (22) is positioned closer to the housing (3) than the first plate (21), the second plate (22) is provided with a first protrusion, the first protrusion protrudes towards the first plate (21) and forms the first thermal insulation groove (24), and the first protrusion is fixedly and sealingly connected to the first plate (21).

7. The temperature regulating structure according to claim 1, wherein the housing (3) is provided with a second thermal insulation groove, and the temperature regulating plate (2) and the second thermal insulation groove form the first thermal insulation cavity (100).

8. The temperature regulating structure according to any one of claims 1 to 7, wherein the temperature regulating plate (2) is fixed to a bottom housing plate of the housing (3), the bottom housing plate is provided with a support structure (36) that supports the temperature regulating plate (2), and the support structure (36) protrudes from an interior wall of the bottom housing plate,
wherein the temperature regulating plate (2) is provided with a support groove (23), and the support structure (36) is arranged in the support groove (23) to support the temperature regulating plate (2).

9. The temperature regulating structure according to claim 8, wherein the temperature regulating plate (2) comprises a first plate (21) and a second plate (22) arranged in parallel, and the first plate (21) and the second plate (22) form a temperature regulating cavity (300), in which a circulation of a temperature regulating medium is made, and the second plate (22) is positioned closer to the housing (3) than the first plate (21),
wherein the second plate (22) is provided with a second protrusion, which is protrudes towards the first plate (21) and forms the support groove (23), and the second protrusion is fixedly and sealingly connected to the first plate (21).

10. The temperature regulating structure according to claim 8, wherein a portion, supported by the supporting structure (36), of the temperature regulating plate (2) is defined as a supported portion, the supported portion and the supporting structure (36) are arranged in one-to-one correspondence, and at least two battery cells (1) are located on the same supported portion.

11. The temperature regulating structure according to claim 8, wherein the supporting structure (36) is in a hollow structure.

12. The temperature regulating structure according to claim 11, further comprising a connecting member (34) fixed to the housing (3) and a support beam (35) fixedly connected to the connecting member (34), wherein the supporting beam (35) supports the temperature regulating plate (2).

13. The temperature regulating structure according to claim 1, wherein
a housing plate, which forms the second thermal insulation cavity (200), of the housing (3) is formed by extrusion molding.

14. An energy storage device, comprising the temperature regulating structure according to any one of claims 1 to 13.

## Patentansprüche

1. Temperaturregulierungsstruktur für eine Energiespeichervorrichtung umfassend ein Gehäuse (3) und eine Temperaturregulierungsplatte (2), die fest mit dem Gehäuse (3) verbunden ist, **dadurch gekennzeichnet, dass**
das Gehäuse (3) und die Temperaturregulierungsplatte (2) eine erste Wärmeisolationskavität (100) bilden und eine zweite Wärmeisolationskavität (200) durch das Gehäuse (3) gebildet ist; und
das Gehäuse (3) eine Innenplatte (31) und eine Außenplatte (32) umfasst, die Temperaturregulierungsplatte (2) fest mit der Innenplatte (31) verbunden ist und die zweite Wärmeisolationskavität (200) zwischen der Innenplatte (31) und der Außenplatte (32) vorgesehen ist.

2. Temperaturregulierungsstruktur nach Anspruch 1, wobei das Gehäuse (3) ferner ein Verstärkungselement (33) umfasst, das in der zweiten Wärmeisolationskavität (200) befestigt ist, und das Verstärkungselement (33) die zweite Wärmeisolationskavität (200) in mindestens zwei Unterkavitäten trennt.

3. Temperaturregulierungsstruktur nach Anspruch 2, wobei ein Ende des Verstärkungselements (33) fest mit der Außenplatte (32) verbunden ist und das andere Ende des Verstärkungselements (33) fest mit der Innenplatte (31) verbunden ist.

4. Temperaturregulierungsstruktur nach Anspruch 1, wobei die Innenplatte (31) und die Außenplatte (32) integriert ausgebildet sind.

5. Temperaturregulierungsstruktur nach Anspruch 1, wobei die Temperaturregulierungsplatte (2) mit einer ersten Wärmeisolierungsnut (24) versehen ist und das Gehäuse (3) und die erste Wärmeisolierungsnut (24) die erste Wärmeisolationskavität (100) bilden.

6. Temperaturregulierungsstruktur nach Anspruch 5, wobei die Temperaturregulierungsplatte (2) eine erste Platte (21) und eine zweite Platte (22) umfasst, die parallel angeordnet sind, und die erste Platte (21) und die zweite Platte (22) eine Temperaturregulierungskavität (300) für die Zirkulation eines Temperaturregulierungsmediums bilden, wobei die zweite Platte (22) näher am Gehäuse (3) positioniert ist als die erste Platte (21), die zweite Platte (22) mit einem ersten Vorsprung versehen ist, der erste Vorsprung in Richtung der ersten Platte (21) vorsteht und die erste Wärmeisolierungsnut (24) bildet, und der erste Vorsprung fest und dicht mit der ersten Platte (21) verbunden ist.

7. Temperaturregulierungsstruktur nach Anspruch 1, wobei das Gehäuse (3) mit einer zweiten Wärmeisolierungsnut versehen ist und die Temperaturregulierungsplatte (2) und die zweite Wärmeisolierungsnut die erste Wärmeisolationskavität (100) bilden.

8. Temperaturregulierungsstruktur nach einem der Ansprüche 1 bis 7, wobei die Temperaturregulierungsplatte (2) an einer unteren Gehäuseplatte des Gehäuses (3) befestigt ist, die untere Gehäuseplatte mit einer Stützstruktur (36) versehen ist, die die Temperaturregulierungsplatte (2) stützt, und die Stützstruktur (36) von einer Innenwand der unteren Gehäuseplatte vorsteht,
wobei die Temperaturregulierungsplatte (2) mit einer Stütznut (23) versehen ist und die Stützstruktur (36) in der Stütznut (23) angeordnet ist, um die Temperaturregulierungsplatte (2) zu stützen.

9. Temperaturregulierungsstruktur nach Anspruch 8, wobei die Temperaturregulierungsplatte (2) eine erste Platte (21) und eine zweite Platte (22) umfasst, die parallel angeordnet sind, und die erste Platte (21) und die zweite Platte (22) eine Temperaturregulierungskavität (300) bilden, in der eine Zirkulation eines Temperaturregulierungsmediums erfolgt, und die zweite Platte (22) näher am Gehäuse (3) positioniert ist als die erste Platte (21),
wobei die zweite Platte (22) mit einem zweiten Vorsprung versehen ist, der in Richtung der ersten Platte (21) ist vorsteht und die Stütznut (23) bildet, und der zweite Vorsprung fest und dicht mit der ersten Platte (21) verbunden ist.

10. Temperaturregulierungsstruktur nach Anspruch 8, wobei ein von der Stützstruktur (36) gestützter Abschnitt der Temperaturregulierungsplatte (2) als ein gestützter Abschnitt definiert ist, der gestützte Abschnitt und die Stützstruktur (36) in einer Eins-zu-Eins-Zuordnung angeordnet sind und mindestens zwei Batteriezellen (1) auf demselben gestützten Abschnitt angeordnet sind.

11. Temperaturregulierungsstruktur nach Anspruch 8, wobei die Stützstruktur (36) eine Hohlstruktur aufweist.

12. Temperaturregulierungsstruktur nach Anspruch 11, die ferner ein an dem Gehäuse (3) befestigtes Verbindungselement (34) und einen fest mit dem Verbindungselement (34) verbundenen Stützträger (35) umfasst, wobei der Stützträger (35) die Temperaturregulierungsplatte (2) stützt.

13. Temperaturregulierungsstruktur nach Anspruch 1, wobei eine Gehäuseplatte, die die zweite Wärmeisolationskavität (200) des Gehäuses (3) bildet, durch Extrusionsformen hergestellt ist.

14. Energiespeichervorrichtung, umfassend die Temperaturregulierungsstruktur gemäß einem der Ansprüche 1 bis 13.

## Revendications

1. Structure de régulation de température pour un dispositif de stockage d'énergie, comprenant un boîtier (3) et une plaque de régulation de température (2) reliée de manière fixe au boîtier (3), **caractérisée en ce que**
le boîtier (3) et la plaque de régulation de température (2) forment une première cavité d'isolation thermique (100), et une deuxième cavité d'isolation thermique (200) est formée par le boîtier (3); et
le boîtier (3) comprend une plaque intérieure (31) et une plaque extérieure (32), la plaque de régulation de température (2) est reliée de manière fixe à la plaque intérieure (31), et la deuxième cavité d'isolation thermique (200) est prévue entre la plaque intérieure (31) et la plaque extérieure (32).

2. Structure de régulation de température selon la revendication 1, dans laquelle le boîtier (3) comprend en outre un élément de renfort (33) fixé dans la deuxième cavité d'isolation thermique (200), et l'élément de renfort (33) sépare la deuxième cavité d'isolation thermique (200) en au moins deux sous-cavités.

3. Structure de régulation de température selon la revendication 2, dans laquelle une extrémité de l'élément de renfort (33) est reliée de manière fixe à la plaque extérieure (32), et l'autre extrémité de l'élément de renfort (33) est reliée de manière fixe à la plaque intérieure (31).

4. Structure de régulation de température selon la revendication 1, dans laquelle la plaque intérieure (31) et la plaque extérieure (32) sont formées de manière intégrée.

5. Structure de régulation de température selon la revendication 1, dans laquelle la plaque de régulation de température (2) est pourvue d'une première rainure d'isolation thermique (24), et le boîtier (3) et la première rainure d'isolation thermique (24) forment la première cavité d'isolation thermique (100).

6. Structure de régulation de température selon la revendication 5, dans laquelle la plaque de régulation de température (2) comprend une première plaque (21) et une deuxième plaque (22) disposées en parallèle, et la première plaque (21) et la deuxième plaque (22) forment une cavité de régulation de température (300) pour la circulation d'un milieu de régulation de température, dans laquelle la deuxième plaque (22) est positionnée plus près du boîtier (3) que la première plaque (21), la deuxième plaque (22) est pourvue d'une première saillie, la première saillie fait saillie vers la première plaque (21) et forme la première rainure d'isolation thermique (24), et la première saillie est reliée de manière fixe et étanche à la première plaque (21).

7. Structure de régulation de température selon la revendication 1, dans laquelle le boîtier (3) est pourvu d'une deuxième rainure d'isolation thermique, et la plaque de régulation de température (2) et la deuxième rainure d'isolation thermique forment la première cavité d'isolation thermique (100).

8. Structure de régulation de température selon l'une quelconque des revendications 1 à 7, dans laquelle la plaque de régulation de température (2) est fixée à une plaque de boîtier inférieure du boîtier (3), la plaque de boîtier inférieure est pourvue d'une structure de support (36) qui soutient la plaque de régulation de température (2), et la structure de support (36) fait saillie à partir d'une paroi intérieure de la plaque de boîtier inférieure,
dans laquelle la plaque de régulation de température (2) est pourvue d'une rainure de support (23), et la structure de support (36) est disposée dans la rainure de support (23) pour soutenir la plaque de régulation de température (2).

9. Structure de régulation de température selon la revendication 8, dans laquelle la plaque de régulation de température (2) comprend une première plaque (21) et une deuxième plaque (22) disposées en parallèle, et la première plaque (21) et la deuxième plaque (22) forment une cavité de régulation de température (300), dans laquelle s'effectue une circulation d'un milieu de régulation de température, et la deuxième plaque (22) est positionnée plus près du boîtier (3) que la première plaque (21),
dans laquelle la deuxième plaque (22) est pourvue d'une deuxième saillie, qui fait saillie vers la première plaque (21) et forme la rainure de support (23), et la deuxième saillie est reliée de manière fixe et étanche à la première plaque (21).

10. Structure de régulation de température selon la revendication 8, dans laquelle une section de la plaque de régulation de température (2) soutenue par la structure de support (36) est définie comme une section soutenue, la section soutenue et la structure de support (36) sont disposées en correspondance biunivoque, et au moins deux cellules de batterie (1) sont disposées sur la même section soutenue.

11. Structure de régulation de température selon la revendication 8, dans laquelle la structure de support (36) présente une structure creuse.

12. Structure de régulation de température selon la revendication 11, comprenant en outre un élément de liaison (34) fixé au boîtier (3) et un support porteur (35) relié de manière fixe à l'élément de liaison (34), dans laquelle le support porteur (35) soutient la plaque de régulation de température (2).

13. Structure de régulation de température selon la revendication 1, dans laquelle
une plaque de boîtier du boîtier (3), qui forme la deuxième cavité d'isolation thermique (200), est formée par moulage par extrusion.

14. Dispositif de stockage d'énergie, comprenant la structure de régulation de température selon l'une quelconque des revendications 1 à 13.
